# EUROPÄISCHE PATENTSCHRIFT

(11) **EP 1 341 738 B1**
(45) Veröffentlichungstag und Bekanntmachung des Hinweises auf die Patenterteilung: **22.09.2004**
(21) Anmeldenummer: 01988703.3
(22) Anmeldetag: 17.10.2001
(51) Int. Cl.: C04B 35/66, C04B 35/043, B22D 41/02, F27D 1/00

(54) **VERFAHREN ZUR ERSTELLUNG EINER FEUERFESTEN AUSKLEIDUNG**
METHOD FOR PRODUCING A FIRE-RESISTANT LINING
PROCEDE DE FABRICATION D'UN REVETEMENT REFRACTAIRE

(30) Priorität: 21.10.2000 DE 10052352
(43) Veröffentlichungstag der Anmeldung: 10.09.2003
(73) Patentinhaber: Refractory Intellectual Property GmbH & Co. KG, 1100 Wien (AT)
(72) Erfinder: BUXBAUM, Franz, 2540 Bad Vöslau (AT); ECKSTEIN, Wilfried, 8703 Trofaiach (AT)
(74) Vertreter: Becker, Thomas, Dr., Dipl.-Ing.
(86) Internationale Anmeldenummer: PCT/EP2001/012016
(87) Internationale Veröffentlichungsnummer: WO 2002/034693

(56) Entgegenhaltungen:
- GB-A- 956 270
- GB-A- 995 565
- US-A- 3 222 196
- US-A- 4 049 461
- US-A- 4 799 652
- US-A- 4 829 538
- DATABASE WPI Section Ch, Week 199746 Derwent Publications Ltd., London, GB; Class L02, AN 1997-490270 XP002191753 & BR 9 600 172 A (CSN CIA SIDER NACIONAL), 7. Oktober 1997 (1997-10-07)

## Beschreibung

Die Erfindung betrifft ein Verfahren zur Erstellung einer feuerfesten Auskleidung.

Herde von Elektroöfen werden vielfach mit trockenen Herdmassen zugestellt. Neben Massen auf Basis Sinterdolomit finden überwiegend Massen auf Basis MgO-Sinter Verwendung.

Im Stand der Technik wird der Korngrößenverteilung eine wesentliche Bedeutung bei der Verarbeitung der Masse und ihrer Verdichtbarkeit beigemessen.

Beim (oxidierenden) Anfahren eines Ofens, der mit einer neuen Masse zugestellt wurde, kommt es schnell zu einer keramischen Bindung der Masse. Die Auskleidung ist damit weitestgehend resistent sobald beispielsweise Schrott chargiert wird.

Die EP 0 214 882 B1 beschreibt eine feuerfeste Ofenauskleidung, die aus mehreren Schichten aufgebaut ist, wobei die der Metallschmelze zugewandte Schicht im Betrieb vollständig sintern soll, während die dahinter liegenden Schichten, insbesondere die der Ofenwand zugewandte Schicht, allenfalls teilweise sintern soll, um nach Verschleiß der Auskleidung diese leichter ausbrechen zu können.

Die feuerfeste Masse besteht aus feuerfesten anorganischen Teilchen, die in einem Bindemittel eingebettet sind. Die unterschiedlichen Sintereigenschaften der einzelnen Schichten werden über die Korngröße des feuerfesten anorganischen Materials eingestellt.

Mit der Erfindung soll die Möglichkeit geschaffen werden, zum Beispiel eine Herdauskleidung erstellen zu können, die unterschiedliches Sinterverhalten über ihre Dicke aufweist.

Das erfindungsgemäße Verfahren umfasst die Merkmale des Anspruchs 1. In den Ansprüchen 2 bis 7 sind Ausführungsvarianten genannt.

Überraschend wurde festgestellt, daß die Masse dazu grundsätzlich nur zwei Komponenten (Bestandteile) umfassen muß, nämlich MgO-Sinter und ein Reduktionsmittel.

Die Verwendung eines Bindemittels ist überflüssig. Der Auswahl bestimmter Korngrößen oder einer bestimmten Korngrößenverteilung fällt nur untergeordnete Bedeutung zu.

Es genügt, wie ausgeführt, die Masse ausschließlich aus MgO-Sinter und Reduktionsmittel, beispielsweise elementarem Kohlenstoff zu bilden. Neben MgO-Sinter kann das feuerfeste Matrixmaterial bei Bedarf auch andere feuerfeste Oxide wie Al₂O₃, TiO₂, Fe₂O₃, CaO oder dergleichen enthalten; ebenso kann gebrannter Dolomit eingesetzt werden.

Über den Massenanteil des Reduktionsmittels innerhalb der (Herd)Masse läßt sich das Sinterverhalten der (Herd)Masse gezielt einstellen. Durch den Kohlenstoffzusatz (zum Beispiel als Graphit, Ruß, Petrolkoks) kommt es zu einer Reduktion des Di-calciumferrits im MgO-Sinter und es entstehen CaO und FeO. FeO diffundiert in den Periklas (MgO-Sinter) und bildet Magnesiowüstit.

Durch eine Erhöhung des Kohlenstoffzusatzes läßt sich das Sinterverhalten stetig verringern.

Ein Zusatz reiner Metalle wie Si oder Al fördert die genannten Reduktionsvorgänge ebenfalls, indem Sauerstoff verbraucht und die Versinterung der Masse verzögert wird. Andere Reduktionsmittel, insbesondere andere C-Träger wie Harze (z. B. Phenolharz), Pech oder Zucker sind zumindest anteilig möglich.

Grundsätzlich sind solche Zusatzmittel einsetzbar, die als Reduktionsmittel wirken, sofern sie beziehungsweise daraus entstehende Reaktionsprodukte nicht zu Effekten führen, die dem Ziel der Erfindung entgegenstehen. Solche nachteiligen Effekte wären die Förderung der Versinterung der Masse oder die Verringerung ihrer Feuerfestigkeit (zum Beispiel durch Schmelzphasenbildung). Natriumsulfit als Reduktionsmittel würde zum Beispiel zu nicht erwünschtem Natriumoxid als Zersetzungsprodukt führen.

Die nachstehende Tabelle zeigt die Kaltdruckfestigkeiten nach einem reduzierenden Brand bei 1.600 °C in N/mm² für Herdmassen der vorgenannten Art aus MgO-Sinter (Korngröße: bis E mm) und unterschiedlichen Kohlenstoffgehalten, und zwar in Fcrm von Graphit, nach einem oxidierenden Vorbrand bei 1.300 °C.

| Kohlenstoffgehalt | Kaltdruckfestigkeit |
|---|---|
| 0 % | 46,6 |
| 1 % | 44,1 |
| 2 % | 42,4 |
| 3 % | 35,8 |
| 4 % | 27,9 |
| 5 % | 20, 9 |

Im Gegensatz zur Lehre der EP 0 214 882 B1 wird auf die Zugabe eines Bindemittels gezielt verzichtet. Die beschriebenen Effekte treten unabhängig von der gewählten Korngröße des MgO-Sinters auf. Diese kann auch < 5mm sein. Mit anderen Worten: Ausgehend von ein und derselben Grundmasse (MgO-Sinter) lassen sich Herdmassen mit unterschiedlichem Sinterverhalten ausschließlich durch Auswahl und Einstellung der Menge des zugegebenen Reduktionsmittels herstellen.

Auf diese Weise kann eine feuerfeste Auskleidung in mehreren Schichten zugestellt werden, wobei nacheinander Massen der vorgenannten Art eingesetzt werden, jedoch mit jeweils sinkenden Reduktionsmittel-Anteilen. Während die erste Schicht beispielsweise aus einer Masse mit 5 Gew.-% Kohlenstoff besteht, reduziert sich der Kohlenstoffgehalt der anschließend auf diese erste Schicht beziehungsweise nachfolgende Schichten aufgetragenen weiteren Schichten auf beispielsweise 0,5 % in der zuletzt aufgebrachten, in der Anwendung der Metallschmelze benachbarten Schicht.

Während der Kohlenstoff dieser zuletzt aufgetragenen Schicht mit geringstem Kohlenstoffgehalt bei Inbetriebnahme des Ofens (an der Feuerseite) wenige cm tief ausbrennt, so daß in dieser Schicht eine nahezu vollständige Versinterung wie bei herkömmlichen Herdmassen erreicht wird, wird der Sintergrad der dahinterliegenden Schichten (mit steigendem Kohlenstoffgehalt) zunehmend verringert, so daß beispielsweise die äußere, dem Metallmantel des Ofens benachbarte Schicht auch nach längerer Einsatzzeit mürbe bleibt und nur geringfügig versintert ist, was das Ausbrechen der Auskleidung im Reparatur- oder Ersatzfall erheblich begünstigt.

Es können unterschiedliche MgO-Sinter eingesetzt werden. Aufgrund des beschriebenen Chemismus eignen sich insbesondere auch MgO-Sinter mit höheren Eisengehalten (chemische Analyse), die bisher nur bedingt einsetzbar waren.

Nach einer Ausführungsform werden deshalb MgO-Sinter mit einem Fe₂O₃-Gehalt > 1,5 oder > 3 Gew.-%, nach einer weiteren Ausführungsform MgO-Sinter mit einem Fe₂O₃-Gehalt > 5 Gew.-% vorgeschlagen.

Ausgedrückt als Mineralparagenese entspricht dies einem C₂F-Gehalt von ca. 4 Gew.-% beziehungsweise 6 Gew.-%.

Der Kohlenstoff kann als Graphit, Ruß oder dergleichen zugesetzt werden. In jedem Fall ist eine homogene Vermischung mit dem Sinterkorn anzustreben. Die Korngröße des Kohlenstoffs kann < 200 µm betragen, nach einer Ausführungsform < 100 µm.

## Patentansprüche

1. Verfahren zur Erstellung einer feuerfesten Auskleidung eines metallurgischen Schmelzgefäßes in mehreren übereinanderliegenden Schichten, wobei nacheinander feuerfeste Massen, die MgO-Sinter und bis zu 5 Gew.-% mindestens eines Reduktionsmittels aus der Gruppe: Metalle, kohlenstoffhaltige Substanzen aufweisen, jedoch mit jeweils abnehmenden Reduktionsmittelgehalten, aufgebracht werden.

2. Verfahren nach Anspruch 1, bei dem als Reduktionsmittel elementarer Kohlenstoff eingesetzt wird.

3. Verfahren nach Anspruch 1, bei dem als Reduktionsmittel eines aus der Gruppe: Harze, Pech, Teer, organische Zusatzstoffe eingesetzt wird.

4. Verfahren nach Anspruch 1, bei dem die feuerfeste Masse ausschließlich aus MgO-Sinter und Reduktionsmittel besteht.

5. Verfahren nach Anspruch 1, bei dem eine feuerfeste Masse verwendet wird, deren MgO-Sinter einen Fe₂O₃-Gehalt > 1,5 Gew.-% aufweist.

6. Verfahren nach Anspruch 1, bei dem eine feuerfeste Masse verwendet wird, deren MgO-Sinter einen Fe₂O₃-Gehalt > 3 Gew.-% aufweist.

7. Verfahren nach Anspruch 1, bei dem eine feuerfeste Masse verwendet wird, deren MgO-Sinter einen Fe₂O₃-Gehalt > 5 Gew.-% aufweist.

## Claims

1. A method of producing a refractory lining of a metallurgical melting vessel in multiple superimposed layers, wherein refractory masses, which have MgO sinter and up to 5 weight-percent of at least one reducing agent from the group: metals, carbonaceous substances, being applied sequentially, with a reduced content of reducing agent in each case, however.

2. The method according to Claim 1, wherein elemental carbon is used as the reducing agent.

3. The method according to Claim 1, wherein a reducing agent from the group: resins, pitch, tar, organic additives is used.

4. The method according to Claim 1, wherein the refractory mass comprises exclusively MgO sinter and reducing agent.

5. The method according to Claim 1, wherein a refractory mass is used whose MgO sinter has a Fe₂O₃ content > 1.5 weight-percent.

6. The mass according to Claim 1, wherein a refractory mass is used whose MgO sinter has a Fe₂O₃ content > 3 weight-percent.

7. The mass according to Claim 1, wherein a fireproof mass is used whose MgO sinter has a Fe₂O₃ content > 5 weight-percent.

## Revendications

1. Procédé de fabrication d'un revêtement réfractaire pour récipient de fusion métallurgique en plusieurs couches superposées, des masses réfractaires contenant du MgO fritté et jusqu'à 5 % en poids d'au moins un agent de réduction du groupe métaux/substances carbonées étant appliquées l'une après l'autre, avec cependant une teneur en agents de réduction de plus en plus faible.

2. Procédé selon la revendication 1, dans lequel du carbone élémentaire est utilisé comme agent de réduction.

3. Procédé selon la revendication 1, dans lequel un des éléments du groupe : résines, poix, goudron, adjuvants organiques, est utilisé comme agent de réduction.

4. Procédé selon la revendication 1, dans lequel la masse réfractaire se compose uniquement de MgO fritté et d'agent de réduction.

5. Procédé selon la revendication 1, dans lequel on utilise une masse réfractaire dont le MgO fritté présente une teneur en Fe₂O₃ > à 1,5 % en poids.

6. Procédé selon la revendication 1, dans lequel on utilise une masse réfractaire dont le MgO fritté présente une teneur en Fe₂O₃ > à 3 % en poids.

7. Procédé selon la revendication 1, dans lequel on utilise une masse réfractaire dont le MgO fritté présente une teneur en Fe₂O₃ > à 5 % en poids.
